# EUROPEAN PATENT APPLICATION

(11) **EP 0 654 667 A1**
(43) Date of publication of application: **24.05.1995**
(21) Application number: 94306243.0
(22) Date of filing: 24.08.1994
(51) Int. Cl.: G01N 30/46, G01N 30/40

(54) **Gas chromatography systems**

(30) Priority: 05.11.1993 US 147746
(71) Applicant: THE REGENTS OF THE UNIVERSITY OF MICHIGAN, Ann Arbor, Michigan 48109-1280 (US); CHROMATOFAST, Ann Arbor, Michigan 48104 (US); HORIBA, LTD., Kyoto 601 (JP)
(72) Inventor: Sacks, Richard Douglas, Ann Arbor, Michigan 48103 (US); Peters, Anita Jo, Farmington Hills, Michigan 48335 (US); Klemp, Mark Allen, Swartz Creek, Michigan 48473 (US); Holmes, Edward Jeffrey, Dexter, Michigan 48130 (US)
(74) Representative: Price, Nigel John King

(57) **Abstract**

A gas chromatography system having a column comprising a precolumn and an analytical and also having a source of backflush pressure applied at the intersection of the precolumn and the analytical column. The split column arrangement enables the backflushing of high boiling point components while enabling the simultaneous analysis of lower boiling point components located in the analytical column upon the application of backflush pressure. This greatly reduces the cycle time of a chromatography system as it is unnecessary to backflush the much more slowly eluting, high boiling point components through the entire length of column and there is no need to delay backflushing until completion of analysis of the components of interest. In this manner, backflushing occurs simultaneously with analysis for a first reduction of cycle time, and the high boiling point components are backflushed through a reduced length of column for a second reduction of cycle time of the chromatography system. A thermal focusing chamber enables the trapping of the sample at the sample tube end closest to the precolumn enabling a much more concentrated sample which yields much broader peaks in the chromatogram.

## Description

### BACKGROUND AND SUMMARY OF THE INVENTION

This invention relates to a gas chromatography system for increasing the speed, operational flexibility, and accuracy of gas chromatography procedures.

Gas chromatography is a widely employed technique for the separation and analysis of complex mixtures of volatile organic and inorganic compounds. The mixture is separated into its components by eluting them from a column having a sorbent by means of a moving gas.

Gas chromatography procedures can be classified into two major divisions: gas-liquid chromatography and gas-solid chromatography. Gas-liquid chromatography is presently the most widely employed type and incorporates a nonvolatile liquid sorbent coated as a thin layer on an inert support structure, generally a capillary tube. The moving gas phase called the carrier gas flows through the chromatographic analytical column. The analyte partitions or divides itself between the moving gas phase and the sorbent and moves through the column at a rate dependent upon the partition coefficient or solubility of the analyte components. Various types of analytical columns are employed such as tubular glass or stainless steel capillary tubes. In use, the analyte is introduced at the entrance end of the column within the moving carrier gas stream. The components making up the sample become separated along the column and elute from the exit end of the column at intervals and in concentrations characteristic of the properties of the analyte components. A detector, for example, a thermal conductivity detector or a flame ionization detector (FID) at the exit end of the column responds to the presence of analyte components. Upon combustion of the eluted material in the FID, charged species are formed in the flame. The flame behavior is monitored through a biased ion detector which, along with associated electronics, produces a time versus magnitude trace of the detector output. The trace for a complex mixture includes numerous peaks of varying intensity. Because individual constituents of the analyte produce peaks at characteristic times having magnitudes that are a function of the constituent concentration, much information is gained through an evaluation of the chromatogram.

Gas chromatography systems of the type described above are in wide-spread use today. Although present systems provide excellent performance and utility, this invention seeks to optimize and further enhance the usefulness of the procedure.

Present gas chromatography apparatus and techniques often require significant analysis times necessary to complete the analysis of a single sample. Such time requirements are imposed due to several factors. The use of long columns (i.e. greater than 10m) increases the time necessary for materials of interest to traverse the entire column. Long column lengths are traditionally necessary since the sample cannot be delivered at the entrance end of the column as a highly concentrated plug of material, but rather is introduced over a significant time period. In order to provide acceptable definition in the separated mixture when the sample cannot be introduced as a dense plug, it is necessary to allow the analyte to travel significant distances along the separation column to avoid smearing of the output caused by differences in the time that portions of the analyte are introduced into the column. In addition, for some analytes the process of complete separation is significantly increased due to the presence of relativity high boiling point components which travel very slowly along the separation column. Although all of the significant peaks of interest may elute within a relatively short time period, it is necessary to wait for higher boiling point components to elute from the column the next sample can be introduced.

A further time constraint in traditional gas chromatography procedures is the backflushing process. Following separation, it is ordinarily necessary to backflush the column by providing a fluid stream which travels in a direction opposite that which the analyte moves during separation. This process cleanses the column of any analyte components which might remain and enables the column to be used a greater number of cycles. Because the time for backflushing necessary to purge the column is a function of the square of its length, long column gas chromatography systems require a significant time in which to conduct a gas chromatography experiment.

The above mentioned time constraints on conducting gas chromatography evaluations using traditional systems can limit its utility in applications such as process control procedures or gathering large samples of data in order to provide statistical process quality assurance information.

The gas chromatography system and procedures in accordance with the present invention achieve significant reductions in the time necessary to conduct a gas chromatography evaluation. These improvements in evaluation time are attributable to a number of factors. First, a split analytical column is used to decrease column backflush time by commencing backflush of a first portion of the analytical column while separation continues in a second portion of the analytical column.

According to one aspect of this invention, the chromatography analysis time is reduced by incorporating a split column backflush system in which a vacuum pump is used to reverse the flow direction of fluid through the column after the low boiling point components (relative to the other components) of the mixture have eluted from the column. Accordingly, high boiling point materials which have not traveled a significant distance along the column can be vented in a comparatively short period of time through backflushing while analysis of low boiling point materials occurs simultaneously. This backflushing operation is achieved using a pressure applied through a midpoint column connection and a vacuum pump which draws fluid through the separation column in a reverse direction with the assistance of compressed gas sources to drive the backflush flow, which are useful when using long columns. The backflush flow is generated by a positive pressure applied at the column midpoint and the negative pressure supplied by the vacuum pump.

Additional benefits and advantages of the present invention will become apparent to those skilled in the art to which this invention relates from the subsequent description of the preferred embodiments and the appended claims, taken in conjunction with the accompanying drawings.

### BRIEF DESCRIPTION OF THE DRAWINGS

Figure 1 is a pictorial view of a gas chromatography system in accordance with this invention;
Figure 2 is a schematic diagram similar to Figure 1 except showing the fluid flow directions when the system is in the inlet flush mode;
Figure 3 is a schematic diagram similar to Figure 1 except showing the fluid flow directions in an analysis mode; and
Figure 4 is a schematic diagram similar to Figure 1 except showing the fluid flow directions in an analysis and backflush mode;
Figure 5 depicts a flow diagram describing a procedure for determining the midpoint backflush pressure.

### DETAILED DESCRIPTION OF THE EMBODIMENT

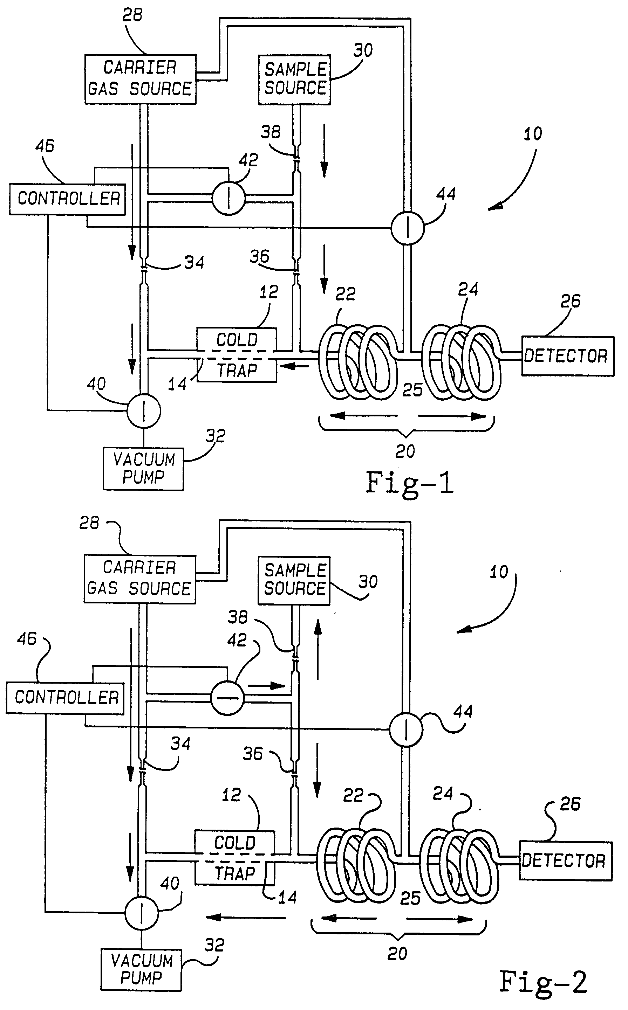

Figures 1-4 provide a schematic diagram of a gas chromatography system in accordance with this invention which is generally designated by reference number 10. As shown, gas chromatography system 10 includes a thermal focusing chamber or cold trap 12 having inlets and outlets for conducting the flow of a cryogenic gas such as nitrogen. A short length of metal capillary sample tube 14 passes through chamber 12 and conducts the analyte through the chamber. A heater circuit (not shown) may be connected to metal sample tube 14 via a pair of conductive blocks or soldered connections and provides a short duration, high current pulse which causes extremely rapid heating of the sample tube. One such heater circuit which can be employed in conjunction with this invention is a multi-stage capacitive discharge circuit as is described in U.S. Patent No. 5,096,471, assigned to the Assignee of the present application and is hereby incorporated by reference. Sample tube 14 is connected to a gas chromatography analytical column 20 having a precolumn 22 portion and an postcolumn 24 portion meeting at column midpoint 25 and is preferably a fused silica capillary tube. Note that the respective portions of analytical separation columns 20 are both separation columns and are referred to as pre and post analytical columns to define their positions relative to their interconnection 25. The end opposite the connection with precolumn 22 of postcolumn 24 is connected to detector 26 which may be a flame ionization detector (FID). Carrier gas source 28 provides the source of a carrier gas such as hydrogen or helium and communicates with sample tube 14 through a conduit branch. Carrier gas source 28 also communicates with precolumn 22 through an additional conduit branch. Sample source 30 provides a sample at a pressure which is less than that of carrier gas source 28 and may be at ambient pressure or below and is connected to sample tube 14 and precolumn 22 through another conduit branch. Vacuum pump 32 communicates with the inlet end of sample tube 14 and provides a vacuum pump pressure lower than sample pressure on the order of about a few Torr. As shown, various pneumatic restrictors 34, 36, and 38 are provided which are comprised of varying lengths of capillary tube which are used to control the flow rates of fluids through the various flow paths.

A trio of valves 40, 42, and 44 are provided which are preferably pneumatically or electrically controlled on/off valves. As shown, valve 42 controls the flow of fluids between the carrier gas and sample flow paths, valve 40 exposes the inlet end of sample tube 14 to vacuum pump 32, and valve 44 controls fluid flow between carrier gas source 28 and column midpoint 25. In an alternative embodiment (not shown) valve 40 could be eliminated in favor of a vacuum pump 32 which inherently performs the function of valve 40 when not energized. Operation of valves 40, 42 and 44, the heater (not shown), and vacuum pump 32 is coordinated by controller 46.

Now with reference to Figures 1-4, the operation of system 10 will be described. The arrows in the figures indicate the direction of fluid flow in the various modes of operation. Figure 1 represents system 10 in a collection mode of operation. In this mode, valve 40 and 44 are opened and valves 42 is closed. By having valve 40 open, vacuum pump 32 serves as the lowest pressure point for the three separate flow paths originating at carrier gas source 28, sample source 30, and detector 26. Thus, fluids flow through all the flow paths toward vacuum pump 32. By having valve 44 open, carrier gas from carrier gas source 28 continues to flow in postcolumn 24 in the direction of detector 26, thereby preventing contaminates from entering the system through postcolumn 24. During this mode of operation, cold trap 12 is at a low temperature and, therefore, the sample condenses on sample tube 14 as it is being introduced into the chamber at its end closest to precolumn 22. A small amount of carrier gas is being continually vented at vacuum pump 32. For a brief interval (0.5 - 1.0 seconds), valve 42 is then opened in order to purge sample source 30 and to enable the remainder of the sample to be pulled into cold trap 12. The direction of fluid flow is indicated in Figure 2 for this inlet flush operation. This operation is significant in that it has the effect of purging the conduit and the restrictor 38, thus eliminating the remanent of prior samples from influencing subsequent evaluation.

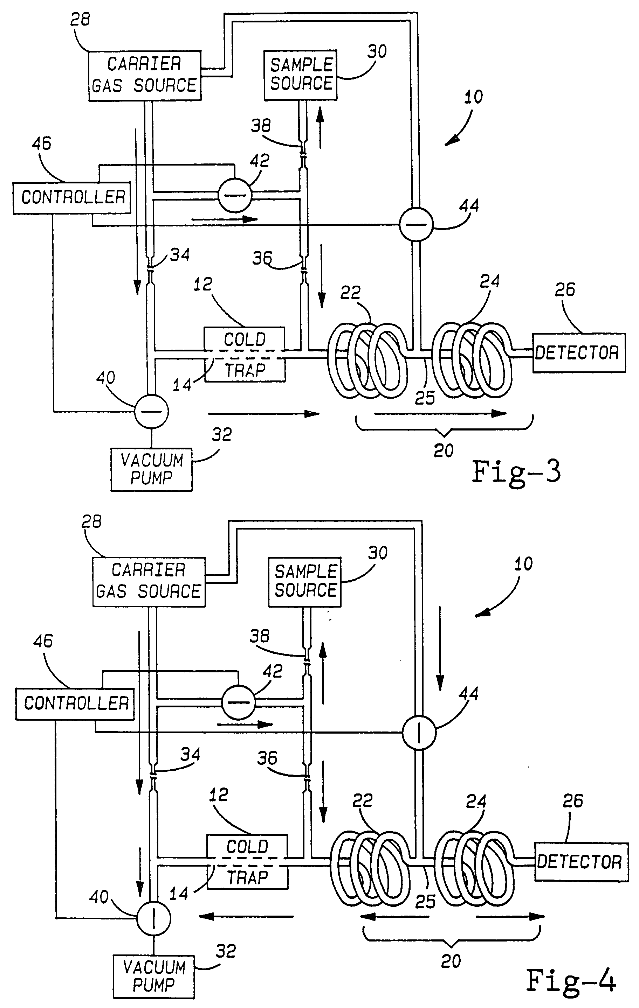

After a sample collection interval of, for example, several seconds, valve 42 remains opened and valve 40 and 44 are closed to effectuate an injection mode of operation as shown in Figure 3. Simultaneously, a heating pulse is provided by a heater circuit (not shown) to vaporize the collected sample. In this mode, detector 26 which is exposed to atmosphere constitutes the lowest pressure point of the system. The main flow of carrier gas in this mode is through restrictor 34, through sample tube 14, through precolumn 22 and postcolumn 24, and into FID 26. A secondary forward flow of carrier gas originates from source 28 and travels through valve 42, restrictor 36 and then to precolumn 22. The relative flow rates through these two paths are determined by the characteristics of restrictors 34 and 36. It should be noted that the flow of carrier gas through restrictor 36 dilutes the sample being introduced from cold trap 12. Accordingly, it is important to limit the flow rate through this pathway. As mentioned previously, during the injection mode, the sample which has collected at the outlet side of sample tube 14 is directly imputed into precolumn 22 without having to traverse the entirety of sample tube 14.

Figure 4 illustrates gas chromatography system 10 during a simultaneous analysis and backflush mode of operation in which valves 40, 42 and 44 are opened. In this mode, carrier gas source 28 serves as a high pressure point for the system whereas vacuum pump 32 defines the low pressure point. Any analyte components remaining in precolumn 22 will be redirected back into thermal focusing chamber 12 where they can be vented through vacuum pump 32 if the trap is maintained at a high temperature or refocused if the trap is maintained at a cold temperature. Accordingly, this system can be used to provide a retrapping and reinjection mode. Because valve 42 is open, there remains a purge flow from carrier gas source 28 to the sample source 30 (which is at a lower pressure than the carrier gas source). Therefore, the system is not subject to contamination from the sample inlet during backflushing. Simultaneously with precolumn 22 being backflushed to remove the higher boiling point compounds which move through analytical column 20 at a much lower rate than the lower boiling point materials which will have already eluted past the junction point of precolumn 22 and postcolumn 24, the lower boiling point compounds flow into FID 26 for analysis. Therefore, the lower boiling point materials that have passed the junction point of precolumn 22 and analytical column 24 will continue to flow into detector 26 while the higher boiling point materials are backflushed. This split column design enables a decreased analysis time as the higher boiling point materials are backflushed through a shorter length of column, than a non-split column, simultaneously with the lower boiling point materials continuing to move through postcolumn 24.

In order to provide the desired fluid flow directions and relative flow rates, it will be necessary to select the value of restrictors 34, 36 and 38 in accordance with the specific requirements of a particular application. In some instances, separate restrictor elements may be unnecessary due to the inherent flow restriction characteristics of various conduits used to form the system.

In order for an analysis to continue without variation and retention times during column backflush, the pressure at the junction between precolumn 22 and postcolumn 24 must not change when valve 44 is opened because the fluid flow through valve 44 becomes the sole source of carrier gas to detector 26. If the pressure is set correctly, no change in the fluid flow rate to detector 26 should occur when valve 44 is opened. Final tuning of the backflush pressure may be established using sample injections and comparing the retention times of known components in the mixture with and without backflush. Shifts in elution time may be corrected by making adjustments to the pressure regulator supplying carrier gas from carrier gas source 28. By properly regulating the pressure in the conduit branch providing supply gas to the intersection of precolumn 22 and postcolumn 24, it is possible to eliminate valve 44, but still obtain the same results in the absence of valve 44. Furthermore, the time at which backflushing is commenced is dependent upon the particular components desired to be removed during the analysis. The expected backflush initiation time may vary due to the pressure drop along the length of the column resulting from gas compressibility and having a precolumn 22 and postcolumn 24 interconnection point such that the precolumn 22 and postcolumn 24 are slightly different lengths. Thus, the exact time needed for backflush start must be determined experimentally for the particular system being used.

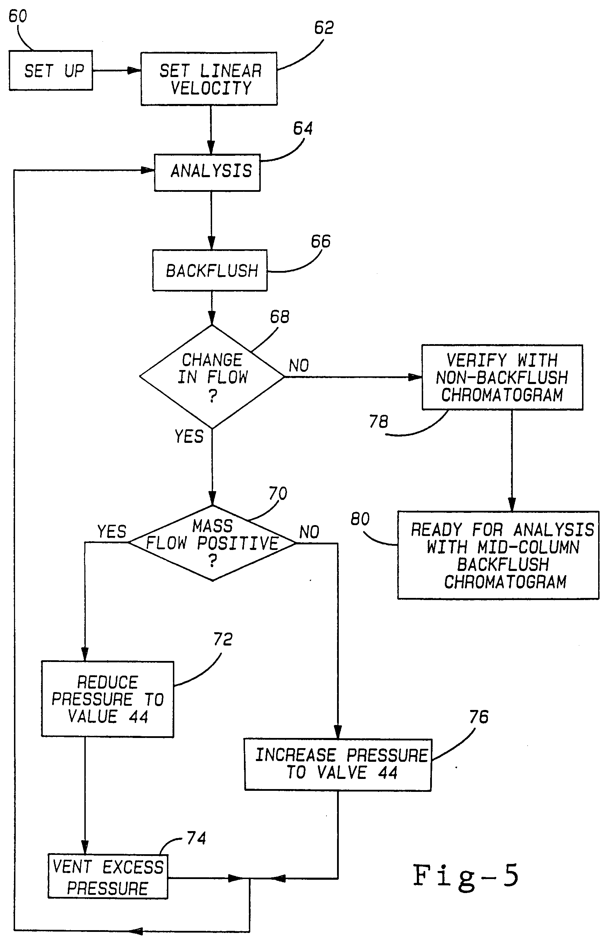

Figure 5 depicts a flow chart describing a procedure for establishing the correct pressure at midpoint 25. Starting at step 60, chromatograph 10 is configured by setting the temperature and the computer acquisition configuration. Next, the linear velocity fluid flow is set at step 62 by decomposing methane through heating to excessive temperatures in sample tube 14 (referred to as cracking) to determine the holdup time. After the sample has been moved into the cold trap and the inlet has been flushed, valve 42 is opened while valves 40 and 44 remain closed to effectuate loading the sample into the column 20 to begin the analysis, as shown in step 64. After a predetermined amount of time, valve 44 is then opened in order to establish a backflushing pressure through precolumn 22 as shown in step 66. A test is then performed at decision box 68 in order to determine if a change in the flow has occurred at the column 20 side of valve 44. If a change has occurred, it is next determined at decision box 70 whether the mass flow is negative or positive. If the flow is positive, the backflush pressure is too high and is therefore reduced as is shown in step 72, and the excess pressure is vented as is shown in step 74. If the mass flow pressure is negative, the backflush pressure is too low and the pressure to valve 44 must be increased as shown in step 76. After the pressure supplied to valve 44 has been adjusted accordingly, the analysis phase is repeated starting at step 64. If there is no change in flow rate when tested at decision step 68, the pressure is determined to be properly matched, and an analysis should be performed with backflushing, and the results compared to a chromatogram resulting from similar conditions without backflush, as shown in step 78. If verification is successful, the midpoint backflush column chromatography system may then be used to perform sample analysis as shown in step 80.

As an example of a chromatography system as described herein, column 20 comprises a 26.0 meter long, 0.25 mm, i.d. fused silica capillary tube within a 0.25 microns thick methyl silicone stationary phase. Each of the restrictors were formed from 0.1 mm. i.d. fused silica deactivated capillary tubes with restrictors 34, 36 and 38 having lengths of 40 cm., 80 cm. and 40 cm., respectively. Valves 40, 42 and 44 were 2 way, low dead volume valves and are electrically actuated. The carrier gas was applied continuously to yield a system pressure of 32.5 PSI and a midpoint 25 pressure of 20.0 PSI. The vacuum pump 40 used was 2-stage pump, but need not be limited to a 2-stage pump.

As described previously, gas chromatography system 10 possesses a number of significant advantages. Analysis time may be significantly decreased by backflushing the precolumn 22, while at the same time and using the same backflush pressure applied to the precolumn, continuing to analyze the sample in the postcolumn 24. Analysis time is decreased as it is not necessary to wait for the high boiling point materials to elute from the analytical column because they are backflushed from the precolumn over a shorter distance while analysis of higher boiling point materials occurs substantially simultaneously. Furthermore, neither valves 40, 42, or 44 are in the flow path of the sample components, substantially minimizing the memory effect and sample contamination. In addition, the inlet system is continually purged when sample collection is not occurring which further minimizes the memory effect. Finally, because system 10 pulls a sample from source 30 using vacuum pump 32, the system is applicable to a wide range of inlet environments including direct air monitoring.

While the above description constitutes the preferred embodiments of the present invention, it will be appreciated that the invention is susceptible of modification, variation and change without departing from the proper scope of the accompanying claims.

## Claims

1. A gas chromatography system comprising:
a source of sample;
a source of carrier gas;
a sample trap;
a first chromatography separation column communicating with said sample trap;
a second chromatography separation column communicating with said first column;
a detector for sensing the presence of components of said sample upon elution from said second column;
a backflush circuit having a first end communicating with said source of a carrier gas and a second end communicating between said first and second columns;
temperature control means for controlling the temperature of said sample trap between a low temperature for condensing at least some components of said sample, and a high temperature for vaporizing said some components;
fluid circuit means for causing said sample to flow into said sample trap in a first direction while said sample trap is at a low temperature to effectuate a collection mode, to enable the carrier gas to flow into said sample trap in an opposite direction into the first column while said sample trap is at said high temperature to effectuate an injection mode, and to enable the carrier gas to flow through said backflush circuit 70 effectuate a backflushing mode of said first column and said sample trap while continuing to cause said sample to flow through said second column toward said detector.

2. A gas chromatography system according to Claim 1 wherein said sample trap having a first end communicating with said source of carrier gas and having a second end communicating with said first column.

3. A gas chromatography system according to Claim 2 further comprising a controllable pressure means for causing said sample to flow into said sample trap second end in said first direction during said collection mode.

4. A gas chromatography system as defined in Claim 3 wherein said pressure control means further comprises a vacuum source communicating with said sample trap first end.

5. A gas chromatography system as defined in Claim 4 further comprising a first conduit branch communicating said source of carrier gas with said sample trap first end, and a second conduit branch communicating said source of sample with said sample trap second end, with first valve means between said first and second conduit branches for allowing fluid flow between said branches, wherein during the collection mode, said first valve means is closed causing said carrier gas to flow through said first branch into said vacuum source and said sample to flow through said second conduit branch and through said sample trap toward said vacuum source.

6. A gas chromatography system as defined in Claim 5 wherein during said injection mode, said first valve means is opened allowing said carrier gas to flow through at least a portion of said second conduit branch thereby flushing said portion of the second conduit branch.

7. A gas chromatography system as defined in Claim 5 wherein said control means further controls said gas chromatography system to provide a backflush mode in which said vacuum source is actuated and said first valve means is opened allowing said first column, said second conduit branch, and said sample trap to be purged while carrier gas in said second column is responsive to pressure to advance in a forward direction in said second column.

8. A gas chromatography system as defined in Claim 5 further comprising a first fluid restrictor means in said second conduit branch between said first valve means and said sample source and a second fluid restrictor means in said second conduit branch between said first valve means and said first column, wherein said restrictors control the flow of fluids during said collection, injection and backflush modes.

9. A gas chromatography system as defined in Claim 5 further comprising a third fluid restrictor means in said first conduit branch between said first valve means and said sample trap for controlling the flow of fluids during the said collection, injection and backflush modes.

10. A gas chromatography system as defined in Claim 5 wherein said vacuum source further comprises a vacuum pump and a second valve means.

11. A gas chromatography system as defined in Claim 5 wherein said backflush circuit further comprises a third valve means to enable said carrier gas to flow into said first and second columns during said backflush mode.

12. A gas chromatography system as defined in Claim 5 wherein said vacuum source produces a pressure lower than said source of sample.
